# EUROPEAN PATENT APPLICATION

(11) **EP 2 740 959 A2**
(43) Date of publication of application: **11.06.2014**
(21) Application number: 13195553.6
(22) Date of filing: 03.12.2013
(51) Int. Cl.: F16D 43/24

(54) **Clutch Actuated by Inertia Mass and Friction Damping**

(30) Priority: 06.12.2012 US 201213706558
(71) Applicant: Yang, Tai-Her, Si-Hu Town Dzan-Hwa (TW)
(72) Inventor: Yang, Tai-Her, Si-Hu Town Dzan-Hwa (TW)
(74) Representative: Wright, Howard Hugh Burnby

(57) **Abstract**

A clutch actuated by inertia mass and friction damping is disclosed, in which a relay transmission structure assembly (104) is not additionally installed with a damping device, when the input side of a prime motive end (101) drives the relay transmission structure according to a set rotating direction, relative movement is generated through the friction damping between the inertia mass of the relay transmission structure assembly (104) itself and the adjacent machinery unit contacted in a sliding means, for controlling a clutch device between the output end to perform operations of coupling or releasing.

## Description

### BACKGROUND OF THE INVENTION

### (a) Field of the invention

A clutch actuated by inertia mass and friction damping is disclosed, in which a relay transmission structure assembly (104) is not additionally installed with a damping device, when the input side of a prime motive end (101) drives the relay transmission structure according to a set rotating direction, relative movement is generated through the friction damping between the inertia mass of the relay transmission structure assembly (104) itself and the adjacent machinery unit contacted in a sliding means, for controlling a clutch device between the output end to perform operations of coupling or releasing.

### (b) Description of the Prior Art

A conventional single-way clutch (S.W.C.) or an over running clutch (O.R.C) has following transmission features:
when an active side is driven in one rotational direction, e.g. the clockwise direction, a passive side is able to be linked; on the other hand, when the passive side is driven in the counterclockwise direction, the active side is able to be linked;
when the active side is driven in the counterclockwise direction, the passive side is not able to be linked; when the passive side is driven in the clockwise direction, the active side is not able to be linked, the above mentioned are its transmission features;
when the active side is desired to be driven in one of the directions, e.g. the clockwise direction, the passive side is able to be linked for rotational outputting, and when the passive side is driven in the counterclockwise direction, the active side is not able to be linked, which is not the function that the conventional single-way transmission device can provide.

### SUMMARY OF THE INVENTION

According to the clutch actuated by inertia mass and friction damping provided by the present invention, a relay transmission structure assembly (104) is not additionally installed with a damping device, when the input side of the prime motive end (101) drives the relay transmission structure according to a set rotating direction, relative movement is generated through the friction damping between the inertia mass of the relay transmission structure assembly (104) itself and the adjacent machinery unit contacted in a sliding means, for driving the relay transmission structure assembly (104) and the installed relay output clutch structure, thereby enabling the output-end clutch structure (1052) installed at the output end (102) to perform operations of coupling or releasing for transmitting rotary kinetic energy, and a recovering actuation spring (120) provided between the relay output clutch structure and the output-end clutch structure (1052) is tightened;
when the rotational driving torque at the prime motive end (101) is no longer provided, the relay transmission structure assembly (104) and the installed relay output clutch structure are returned through actions of the recovering actuation spring (120), so the relay output clutch structure and the output-end clutch structure (1052) are in a released state.

According to another aspect of the present invention, a clutch actuated by inertia mass and friction damping comprises a relay transmission structure assembly that is not additionally installed with a damping device; a prime motive end; and a clutch device between the output end, wherein the prime motive end drives the relay transmission structure according to a set rotating direction, and relative movement is generated through the friction damping between the inertia mass of the relay transmission structure assembly itself and the adjacent machinery unit contacted in a sliding means, for controlling the clutch device to perform operations of coupling or releasing.

### BRIEF DESCRIPTION OF THE DRAWINGS

FIG. 1 is a schematic view of the structural theory of the clutch actuated by inertia mass and friction damping of the present invention.
FIG. 2 is a schematic structural view of one embodiment illustrating that the relay coupling structure installed in the relay transmission structure assembly (104) is composed by the screw rod structure (1041) having axial actuation screw angle and the screw nut structure (1042) having axial actuation screw angle.
FIG. 3 is a schematic structural view of one embodiment illustrating that the relay coupling structure installed in the relay transmission structure assembly (104) is composed by the coil-shaped spring capable of rotating for axial actuation (1043).
FIG. 4 is a schematic structural view of one embodiment illustrating that the relay coupling structure installed in the relay transmission structure assembly (104) is composed by the axial compelling over running clutch.
FIG. 5 is a structural schematic view of one embodiment illustrating that the relay coupling structure installed in the relay transmission structure assembly (104) is composed by the axial relay clutch of the axial clutch transmission block having axial compelling pre-forced recovering.
FIG. 6 is a cross sectional view of FIG. 5.
FIG. 7 is a schematic view illustrating the disengaged state of the axial clutch structure (1077) and the output-end clutch structure (1052) as shown in FIG. 5.
FIG. 8 is a schematic view illustrating the engaged state of the axial clutch structure (1077) and the output-end clutch structure (1052) as shown in FIG. 5.
FIG. 9 is a schematic structural view of one embodiment illustrating that the relay coupling structure and the relay outputting structure installed in the relay transmission structure assembly (104) is composed by the linkage cam of radial relay clutch at active side (1081), the middle rolling member (1085) and the radial relay clutch of the radial clutch transmission block (1082) having radial compelling pre-forced recovering.
FIG. 10 is a cross sectional view of FIG. 9.
FIG. 11 is a schematic structural view of one embodiment illustrating that the linkage cam of radial relay clutch at active side (1081) of FIG. 9 being replaced by the cam top of radial relay clutch at active side (1091) for driving the radial clutch transmission block (1082).
FIG. 12 is a cross sectional view of FIG. 11.
FIG. 13 is a schematic structural view of one embodiment illustrating that the top of the linkage cam of radial relay clutch at active side (1081) of FIG. 9 being combined with a roller at cam top of radial relay clutch at active side (1095) for driving the radial clutch transmission block (1082).
FIG. 14 is a cross sectional view of FIG. 13.
FIG. 15 is a schematic structural view of one embodiment illustrating that two or more than two clutch assemblies actuated by inertia mass and friction damping (100) of the present invention and individual prime motive end (101) installed in the same rotating direction for clutch operation are jointly driven in the same rotating direction, and the output end (102) is formed in an individual operating state.
FIG. 16 is a schematic structural view of one embodiment illustrating that two or more than two clutch assemblies actuated by inertia mass and friction damping (100) of the present invention and individual prime motive end (101) installed in different rotating direction for clutch operation are jointly driven in the same rotating direction, and the output end (102) is formed in an individual operating state.

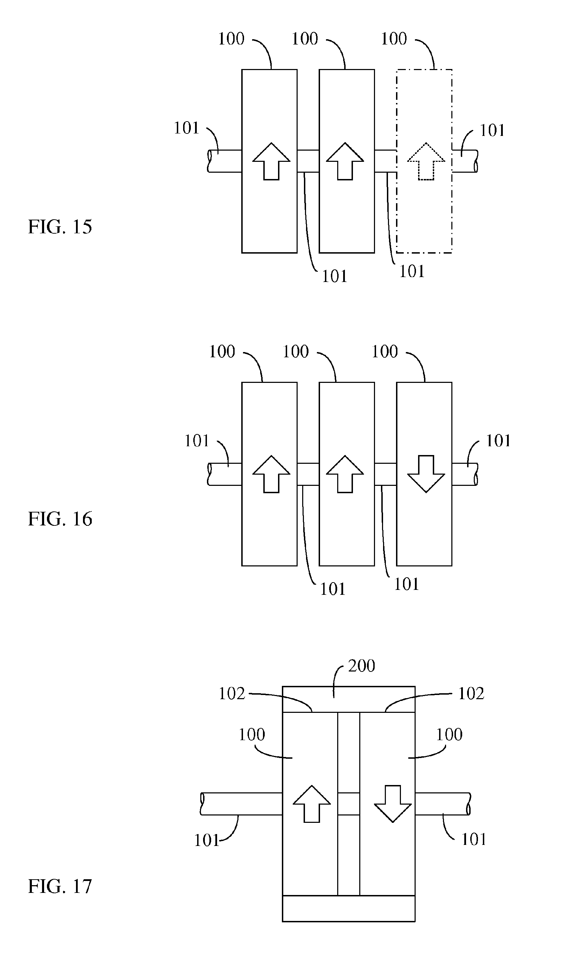

FIG. 17 is a schematic structural view of one embodiment illustrating that two or more than two clutch assemblies actuated by inertia mass and friction damping (100) of the present invention and individual prime motive end (101) installed in different rotating direction for clutch operation are jointly driven in the same rotating direction of the first rotating direction or the second rotating direction, the output end (102) is jointly connected to the same loading interface structural body (200), thereby forming the bidirectional rotating clutch function in the first rotating direction and the second rotating direction.

### DESCRIPTION OF MAIN COMPONENT SYMBOLS

100: clutch assembly actuated by inertia mass and friction damping
101: prime motive end
102: output end
104: relay transmission structure assembly
115: limiting structure
120: recovering actuation spring
200: loading interface structural body
204: relay coupling structure
1041: screw rod structure
1042: screw nut structure
1043: coil-shaped spring capable of rotating for axial actuation
1051: relay output clutch structure
1052: output-end clutch structure
1060: axial compelling over running clutch
1061: active side of axial compelling over running clutch
1062: passive side of axial compelling over running clutch
1063: middle rolling member
1071: active side of axial relay clutch
1072: axial clutch transmission block
1073: axial clutch transmission block recovering spring
1074: axial relay clutch transmission board
1075: middle rolling member
1076: passive side of axial relay clutch
1077: axial clutch structure
1079: transmission end
1081: linkage cam of radial relay clutch at active side
1082: radial clutch transmission block
1083: radial clutch transmission block recovering spring
1084: radial relay clutch transmission board
1085: middle rolling member
1086: passive side of radial relay clutch
1087: radial clutch structure
1089: transmission end
1091: cam top of radial relay clutch at active side
1095: roller at cam top of radial relay clutch at active side

### DETAILED DESCRIPTION OF THE PREFERRED EMBODIMENTS

According to the clutch actuated by inertia mass and friction damping provided by the present invention, a relay transmission structure assembly (104) is not additionally installed with a damping device, when the input side of the prime motive end (101) drives the relay transmission structure according to a set rotating direction, relative movement is generated through the friction damping between the inertia mass of the relay transmission structure assembly (104) itself and the adjacent machinery unit contacted in a sliding means, for driving the relay transmission structure assembly (104) and the installed relay output clutch structure, thereby enabling the output-end clutch structure (1052) installed at the output end (102) to perform operations of coupling or releasing for transmitting rotary kinetic energy, and a recovering actuation spring (120) provided between the relay output clutch structure and the output-end clutch structure (1052) is tightened;

When the rotational driving torque at the prime motive end (101) is no longer provided, the relay transmission structure assembly (104) and the installed relay output clutch structure are returned through actions of the recovering actuation spring (120), so the relay output clutch structure and the output-end clutch structure (1052) are in a released state.

According to the clutch actuated by inertia mass and friction damping, the relay transmission structure assembly (104) includes one or more than one means to form the damping when the prime motive end (101) inputting the rotary kinetic energy to the relay transmission structure assembly (104), including:
(I) The machinery unit of the relay transmission structure assembly (104) is driven by the prime motive end (101) for performing angle displacement or rotating displacement thereby forming damping through the friction between the relay transmission structure assembly (104) and the relative moving structural unit, e.g. a bearing or socket;
(II) The machinery unit installed at the rear portion of the relay transmission structure assembly (104) is driven by the prime motive end (101) thereby forming damping through the friction between the relay transmission structure assembly (104) and the adjacent machinery unit;
(III) Damping formed through the above mentioned means;

With the disclosed structure, a clutch assembly actuated by inertia mass and friction damping (100) is configured.

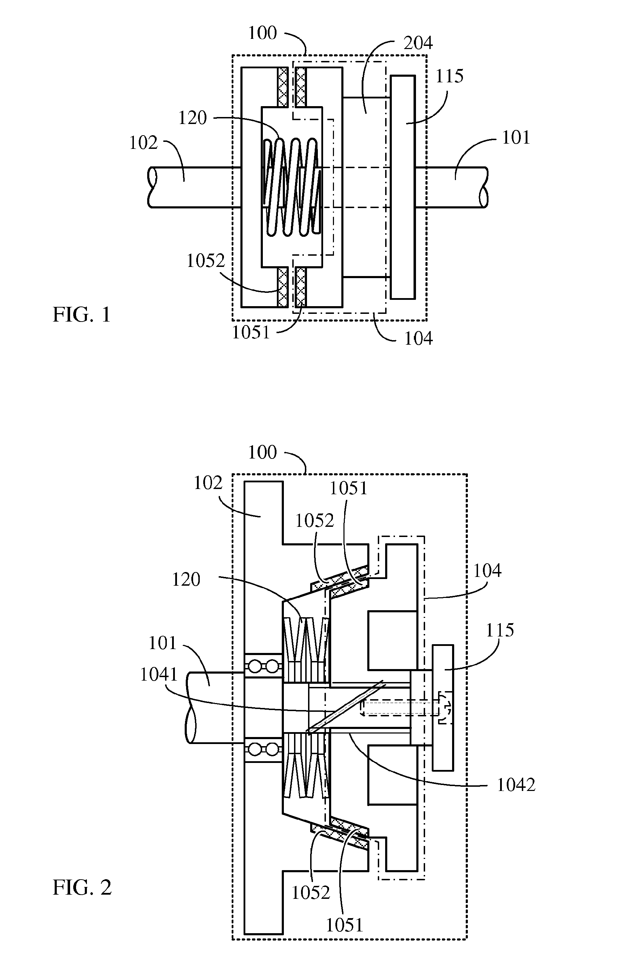

FIG. 1 is a schematic view of the structural theory of the clutch actuated by inertia mass and friction damping of the present invention.

As shown in FIG. 1, it mainly consists of:
-- a prime motive end (101): composed by a rotational mechanism for inputting the rotary kinetic energy; the prime motive end (101) is served to drive an active side of relay coupling structure of a relay coupling structure (204) installed in a relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting the rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational drive and axial movement, the relay transmission structure assembly (104) is provided with a relay coupling structure (204) driven by the prime motive end (101), the relay coupling structure (204) has an active side of relay coupling structure and a passive side of relay coupling structure coaxially coupled and interacted with the active side, a relay transmission structure assembly (104) is not additionally installed with a damping device, when the input side of a prime motive end (101) drives the relay transmission structure according to a set rotating direction, relative movement is generated through the friction damping between the inertia mass of the relay transmission structure assembly (104) itself and the adjacent machinery unit contacted in a sliding means, so as to drive the relay output clutch structure (1051) installed in the relay transmission structure assembly (104) to be engaged with an output-end clutch structure (1052) for transmitting rotary kinetic energy, and a recovering actuation spring (120) is then forced being tightened; when the rotational driving torque from the prime motive end (101) to the output end (102) is no longer provided, the relay output clutch structure (1051) and the output-end clutch structure (1052) are in a released state through a release recovering effect provided by the recovering actuation spring (120) and the passive side of relay coupling structure is returned;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and disposed between the relay output clutch structure (1051) and the output-end clutch structure (1052), and the normal state thereof is to allow the relay output clutch structure (1051) and the output-end clutch structure (1052) being in a released state, and when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is installed in the relay transmission structure assembly (104), when the active side of relay coupling structure is driven by the prime motive end (101), the relay output clutch structure (1051) and the relay transmission structure assembly (104) are driven by the active side of relay coupling structure of the relay coupling structure (204) to be engaged with the output-end clutch structure (1052) so as to transmit rotary kinetic energy, when the driving force from the prime motive end (101) to the output end (102) is no longer provided, the relay output clutch structure (1051) and the output-end clutch structure (1052) are in a released state through the releasing elastic force of the recovering actuation spring (120);
-- an output-end clutch structure (1052): composed by a clutch function structure capable of being engaged with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure, or the synchro-engaging clutch structure;

With the disclosed structure, a clutch assembly actuated by inertia mass and friction damping (100) is configured.

In the clutch actuated by inertia mass and friction damping of present invention, the relay coupling structure (204) installed in the relay transmission structure assembly (104) can be further composed by a screw rod structure (1041) and a screw nut structure (1042);

FIG. 2 is a schematic structural view of one embodiment illustrating that the relay coupling structure installed in the relay transmission structure assembly (104) is composed by the screw rod structure (1041) having axial actuation screw angle and the screw nut structure (1042) having axial actuation screw angle.

As shown in FIG. 2, it mainly consists of:
-- a prime motive end (101): composed by a rotational mechanism for inputting the rotary kinetic energy; the prime motive end (101) is a screw rod structure (1041), having the function of active end of relay coupling structure, for driving the relay transmission structure assembly (104); the prime motive end (101) is installed with a limiting structure (115) for limiting relative positions of the relay transmission structure assembly (104) and the prime motive end (101);
-- an output end (102): composed by a rotational mechanism for outputting the rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational drive and axial movement, the relay transmission structure assembly (104) is installed with a relay coupling structure driven by the prime motive end (101), the relay coupling structure has the function of the active side of relay coupling structure composed by the screw rod structure (1041) and the function of passive side of relay coupling structure composed by the screw nut structure (1042), the screw rod structure (1041) and the screw nut structure (1042) are coaxially coupled and interacted, the above mentioned passive side of relay coupling structure composed by the screw nut structure (1042) is connected to the relay transmission structure assembly (104), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the screw rod structure (1041) is driven by the prime motive end (101), the relay transmission structure assembly (104) connected with the screw nut structure (1042) generates a relative axial movement for driving the relay output clutch structure (1051) installed in the relay transmission structure assembly (104) to be engaged with the output-end clutch structure (1052) for transmitting rotary kinetic energy, and the recovering actuation spring (120) is then forced being tightened;
   when the rotational driving torque from the prime motive end (101) to the output end (102) is no longer provided, the relay output clutch structure (1051) and the output-end clutch structure (1052) are in a released state and the screw nut structure (1042) is returned through a recovering effect provided by the recovering actuation spring (120);
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and disposed between the relay output clutch structure (1051) and the output-end clutch structure (1052), and the normal state thereof is to allow the relay output clutch structure (1051) and the output-end clutch structure (1052) being in a released state, and when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is installed in the relay transmission structure assembly (104), when the screw rod structure (1041) is driven by the prime motive end (101), the relay output clutch structure (1051) and the relay transmission structure assembly (104) are driven by the screw rod structure (1041) of the relay coupling structure to be engaged with the output-end clutch structure (1052) so as to transmit rotary kinetic energy and to force to tighten the recovering actuation spring (120); when the rotational driving torque from the prime motive end (101) to the output end (102) is no longer provided, the relay output clutch structure (1051) and the output-end clutch structure (1052) are in a released state through the releasing elastic force of the recovering actuation spring (120);
-- an out-put end clutch structure (1052): composed by a clutch function structure capable of being engaged with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;

With the disclosed structure, a clutch assembly actuated by inertia mass and friction damping (100) is configured.

In the clutch actuated by inertia mass and friction damping of the present invention, the relay coupling structure installed in the relay transmission structure assembly (104) can be further composed by a coil-shaped spring capable of rotating for axial actuation (1043);

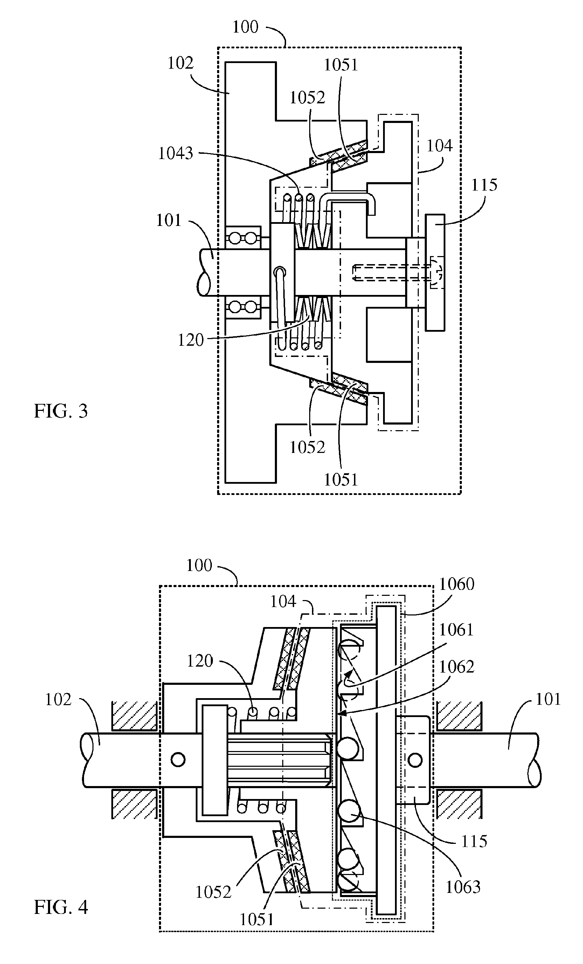

FIG. 3 is a schematic structural view of one embodiment illustrating that the relay coupling structure installed in the relay transmission structure assembly (104) is composed by the coil-shaped spring capable of rotating for axial actuation (1043);

As shown in FIG. 3, it mainly consists of:
-- a prime motive end (101): composed by a rotational mechanism for inputting rotary kinetic energy; the prime motive end (101) is a coil-shaped spring capable of rotating for axial actuation (1043) for driving the relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and capable of rotational drive and axial movement, the relay transmission structure assembly (104) is installed with a coil-shaped spring capable of rotating for axial actuation (1043) serving to provide the relay coupling structure function and is coaxially shaft-installed between the relay transmission structure assembly (104) and the prime motive end (101), one end of the coil-shaped spring capable of rotating for axial actuation (1043) is fastened at the prime motive end (101) for providing the function of the active side of relay coupling structure, the other end of the coil-shaped spring capable of rotating for axial actuation (1043) is installed in the relay transmission structure assembly (104) for providing the function of the passive side of relay coupling structure, a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the coil-shaped spring capable of rotating for axial actuation (1043) is processed with a tighten operation of angular displacement drive at the prime motive end (101), a damping effect is generated, the coil-shaped spring capable of rotating for axial actuation (1043) generates an axial actuation force, so the relay transmission structure assembly (104) generates a relative axial movement, and further drives the relay output clutch structure (1051) installed in the relay transmission structure assembly (104) to be engaged with the output-end clutch structure (1052) so as to transmit rotary kinetic energy, and force the recovering actuation spring (120) being tightened; when the rotational driving torque from the prime motive end (101) to the output end (102) is no longer provided, the relay output clutch structure (1051) and the output-end clutch structure (1052) are in a released state through the releasing recovering force of the recovering actuation spring (120) and the coil-shaped spring capable of rotating for axial actuation (1043) is returned;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and disposed between the relay output clutch structure (1051) and the output-end clutch structure (1052), and the normal state thereof is to allow the relay output clutch structure (1051) and the output-end clutch structure (1052) being in a released state, and when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is installed in the relay transmission structure assembly (104), when the coil-shaped spring capable of rotating for axial actuation (1043) is driven at the prime motive end (101), the relay output clutch structure (1051) and the relay transmission structure assembly (104) are driven by the coil-shaped spring capable of rotating for axial actuation (1043) having the relay coupling structure function and installed between the relay transmission structure assembly (104) and the prime motive end (101), so as to be engaged with the output-end clutch structure (1052) for transmitting rotary kinetic energy and forcing the recovering actuation spring (120) being tightened; when the rotational driving torque from the prime motive end (101) to the output end (102) is no longer provided, the relay output clutch structure (1051) and the output-end clutch structure (1052) are in a released state through the releasing recovering force of the recovering actuation spring (120) and the coil-shaped spring capable of rotating for axial actuation (1043) is returned;
-- an out-put end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;

With the disclosed structure, a clutch assembly actuated by inertia mass and friction damping (100) is configured.

In the clutch actuated by inertia mass and friction damping of the present invention, the relay coupling structure (204) installed in the relay transmission structure assembly (104) can be further composed by an axial compelling over running clutch;

FIG. 4 is a schematic structural view of one embodiment illustrating that the relay coupling structure installed in the relay transmission structure assembly (104) is composed by the axial compelling over running clutch;

As shown in FIG. 4, it mainly consists of:
-- a prime motive end (101): composed by a rotational mechanism for inputting the rotary kinetic energy; the prime motive end (101) is an active side of axial compelling over running clutch (1061), having the function of the active side of relay input coupling structure, for driving the relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting the rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), the relay transmission structure assembly (104) is installed with an axial compelling over running clutch (1060) having the function of relay coupling structure, the axial compelling over running clutch (1060) has an active side of axial compelling over running clutch (1061) and a passive side of axial compelling over running clutch (1062) and middle rolling members (1063), a plurality of saw-shaped intervals are formed between the active side of axial compelling over running clutch (1061) and the passive side of axial compelling over running clutch (1062) for accommodating the middle rolling members (1063) so as to be equipped with the over running clutch function; a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the axial compelling over running clutch (1060) is driven by the prime motive end (101), a damping effect is generated, the active side of axial compelling over running clutch (1061) applies rotational driving torque to the passive side of axial compelling over running clutch (1062) via the middle running members (1063); before the middle rolling members (1063) are forced to be latched between the active side of axial compelling over running clutch (1061) and the passive side of axial compelling over running clutch (1062), the passive side of axial compelling over running clutch (1062) is compelled to be moved axially, so the relay transmission structure assembly (104) installed with the axial compelling over running clutch (1060) generates a relative movement for driving the relay output clutch structure (1051) installed in the relay transmission structure assembly (104) to be engaged with the output-end clutch structure (1052) and forcing the recovering actuation spring (120) being tightened; when the rotational driving torque from the prime motive end (101) to the output end (102) is no longer provided, the relay output clutch structure (1051) and the output-end clutch structure (1052) are in a released state through the releasing recovering force of the recovering actuation spring (120) and the passive side of axial compelling over running clutch (1062) is returned;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and disposed between the relay output clutch structure (1051) and the output-end clutch structure (1052), and the normal state thereof is to allow the relay output clutch structure (1051) and the output-end clutch structure (1052) being in a released state, and when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is installed in the relay transmission structure assembly (104), when the active side of axial compelling over running clutch (1061) is driven by the prime motive end (101), the passive side of axial compelling over running clutch (1062) installed in the relay transmission structure assembly (104) is axially driven so as to drive the relay transmission structure assembly (104) and the relay output clutch structure (1051) installed in the relay transmission structure assembly (104) to be engaged with the output-end clutch structure (1052) for transmitting rotary kinetic energy and forcing the recovering actuation spring (120) being tightened; when the rotational driving torque from the prime motive end (101) to the output end (102) is no longer provided, the relay output clutch structure (1051) and the output-end clutch structure (1052) are in a released state through the releasing elastic force of the recovering actuation spring (120) and the passive side of axial compelling over running clutch (1062) is returned;
-- an out-put end clutch structure (1052): composed by a clutch function structure capable of being engaged with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;

With the disclosed structure, a clutch assembly actuated by inertia mass and friction damping (100) is configured.

In the clutch actuated by inertia mass and friction damping of the present invention, wherein the relay coupling structure installed in the relay transmission structure assembly (104) can be further composed by the axial relay clutch of the axial clutch transmission block having axial compelling pre-forces recovering;

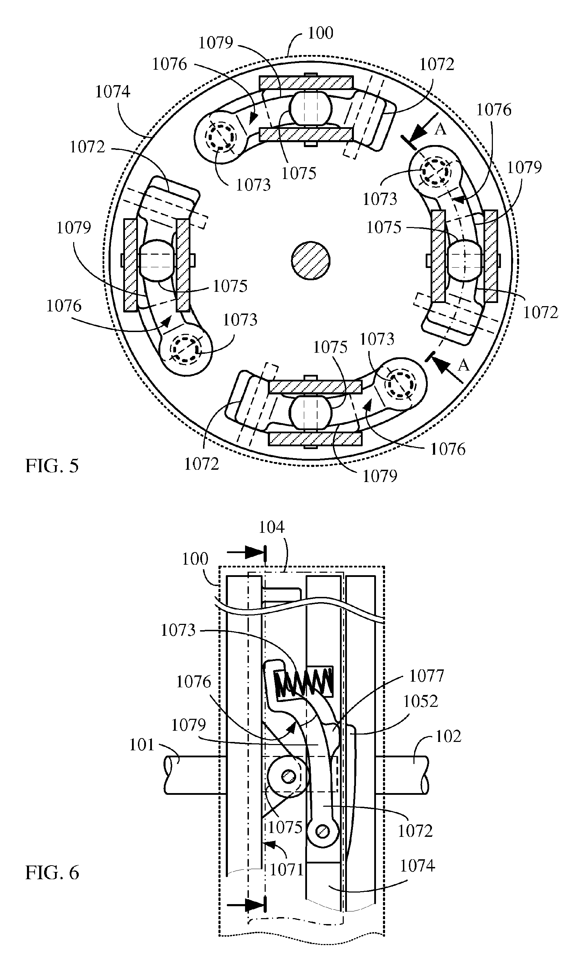

FIG. 5 is a structural schematic view of one embodiment illustrating that the relay coupling structure installed in the relay transmission structure assembly (104) is composed by the axial relay clutch of the axial clutch transmission block having axial compelling pre-forced recovering;

FIG. 6 is a cross sectional view of FIG. 5.

As shown in FIG. 5 and FIG. 6, it mainly consists of:
-- a prime motive end (101): composed by a rotational mechanism for inputting the rotary kinetic energy; the prime motive end (101) is an axial relay clutch, having the function of relay coupling structure, for driving the relay transmission structure assembly (104);
-- an output end (102): composed by a rotational mechanism for outputting the rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), the relay transmission structure assembly (104) is installed with an axial relay clutch which mainly consists of an active side of axial relay clutch (1071), an axial clutch transmission block (1072), an axial clutch transmission block recovering spring (1073), an axial relay clutch transmission board (1074), and a middle rolling member (1075); wherein the active side of axial relay clutch (1071) accommodating the middle rolling member (1075) is driven by the prime motive end (101), the middle rolling member (1075) is coupled to a passive side of axial relay clutch (1076) which is an obliquely compelled surface with respect to the axial clutch transmission block (1072), the axial clutch transmission block (1072) is installed on the axial relay clutch transmission board (1074), one end of the axial clutch transmission block (1072) is fastened on the axial relay clutch transmission board (1074), the other end of the axial clutch transmission block (1072) is served as a transmission end (1079), the passive side of axial relay clutch (1076) of the transmission end (1079) is an obliquely compelled surface allowing the middle rolling member (1075) to be coupled, the other surface of the transmission end (1079) is served as an axial clutch structure (1077), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the active side of axial relay clutch (1071) equipped with the middle rolling member (1075) is applied with rotational driving torque by the prime motive end (101), the passive side of the axial relay clutch (1076) which is an obliquely compelled surface with respect to the axial clutch transmission block (1072) is compelled to be moved by the middle rolling member (1075) installed at the active side of axial relay clutch (1071), and the axial clutch structure (1077) is moved to be coupled with the output-end clutch structure (1052) of the output end (102) for transmitting the rotary kinetic energy, when the rotational driving torque from the prime motive end (101) to the output end (102) is no longer provided, through the elasticity of the axial clutch transmission block (1072), and/or the releasing recovering force of the axial clutch transmission block recovering spring (1073) installed between the axial relay clutch transmission board (1074) and the middle rolling member (1075), such that the axial clutch structure (1077) of the axial clutch transmission block (1072) and the output-end clutch structure (1052) of the output end (102) are in a released state, and the axial relay clutch transmission board (1074) is returned;
-- an output-end clutch structure (1052): the output-end clutch structure (1052) is connected to the output end (102) and is served to be engaged for transmitting rotary kinetic energy with the axial clutch structure (1077) of the transmission end (1079) of the axial clutch transmission block (1072) of the axial relay clutch transmission board (1074), or in a released state;
-- the clutch structure of the axial clutch structure (1077) and the output-end clutch structure (1052) consists of the friction-type clutch structure, the engaging-type clutch structure or the synchro-engaging clutch structure;
-- a middle rolling member (1075): which can be replaced by rolling balls, cone-shaped cylinders, or spherical or arc-shaped protrusions;

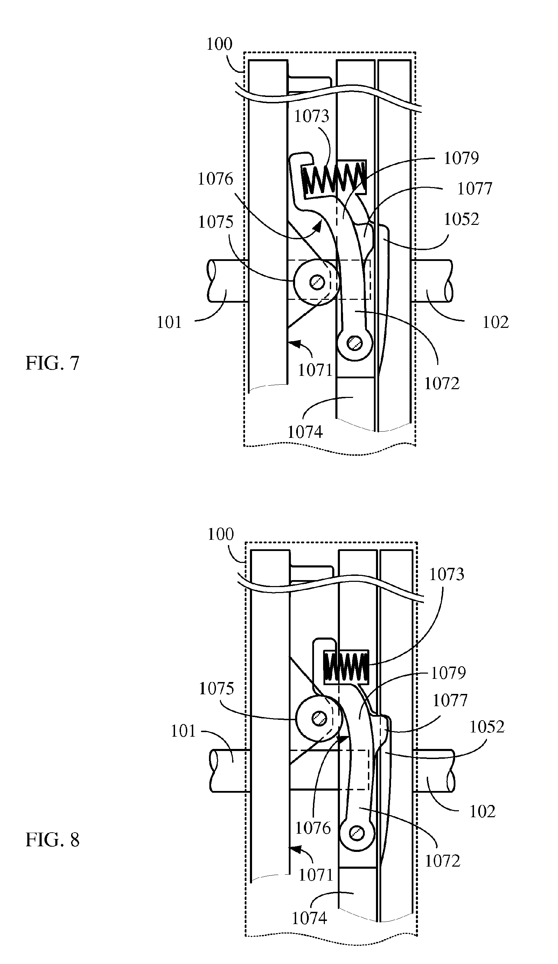

FIG. 7 is a schematic view illustrating the disengaged state of the axial clutch structure (1077) and the output-end clutch structure (1052) as shown in FIG. 5.

FIG. 8 is a schematic view illustrating the engaged state of the axial clutch structure (1077) and the output-end clutch structure (1052) as shown in FIG. 5.

With the disclosed structure, a clutch assembly actuated by inertia mass and friction damping (100) is configured.

In the clutch actuated by inertia mass and friction damping of the present invention, the relay output coupling structure installed in the relay transmission structure assembly (104) can be further composed by a radial relay clutch of the radial clutch transmission block having radial compelling pre-forced recovering;

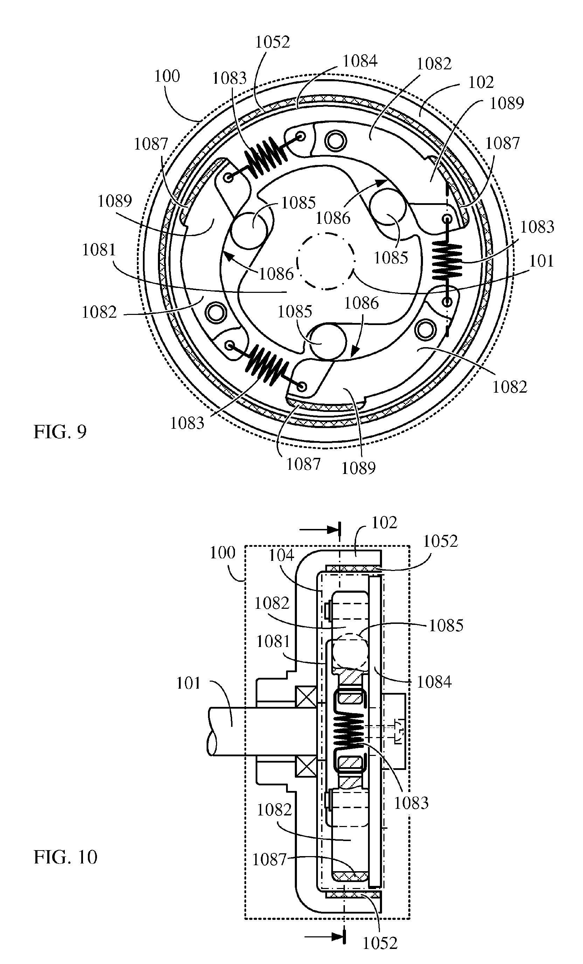

FIG. 9 is a schematic structural view of one embodiment illustrating that the relay coupling structure and the relay outputting structure installed in the relay transmission structure assembly (104) is composed by the linkage cam of radial relay clutch at active side (1081), the middle rolling member (1085) and the radial relay clutch of the radial clutch transmission block (1082) having radial compelling pre-forced recovering;

FIG. 10 is a cross sectional view of FIG. 9.

As shown in FIG. 9 and FIG. 10, it mainly consists of:
-- a prime motive end (101): composed by a rotational mechanism for inputting the rotary kinetic energy; the prime motive end (101) is connected to the linkage cam of radial relay clutch at active side (1081), and the prime motive end (101) is a radial relay clutch, having the function of relay coupling structure, for driving the relay transmission structure assembly (104);
-- an output end (102): composed by a rotational mechanism for outputting the rotary kinetic energy; the annular interior of the output end (102) is installed with an output-end clutch structure (1052), and is controlled by the output-end clutch structure (1052);
-- a relay transmission structure assembly (104): the relay transmission structure assembly (104) is installed between the prime motive end (101) and the output end (102), the three components are arranged as a concentric annular structure, the relay transmission structure assembly (104) has a radial relay clutch which mainly consists of a linkage cam of radial relay clutch at active side (1081), a radial clutch transmission block (1082), a radial clutch transmission block recovering spring (1083), a radial relay clutch transmission board (1084), and a middle rolling member (1085); wherein the radial coupling surface of the linkage cam of radial relay clutch at active side (1081) is installed with the middle rolling member (1085) driven by the prime motive end (101), the middle rolling member (1085) is coupled to a passive side of radial relay clutch (1086) which is an obliquely compelled surface with respect to the radial clutch transmission block (1082), the radial clutch transmission block (1082) is installed on the radial relay clutch transmission board (1084), one end of the radial clutch transmission block (1082) is fastened on the radial relay clutch transmission board (1084), the other end of the radial clutch transmission block (1082) is served as a transmission end (1089), the passive side of radial relay clutch (1086) of the transmission end (1089) is an obliquely compelled surface allowing the middle rolling member (1085) to be coupled, the other surface of the transmission end (1089) is served as a radial clutch structure (1087), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the linkage cam of radial relay clutch at active side (1081) equipped with the middle rolling member (1085) is applied with rotational driving torque by the prime motive end (101), the passive side of radial relay clutch (1086) which is an obliquely compelled surface with respect to the radial clutch transmission block (1082) is compelled to be moved by the middle rolling member (1085) installed between the linkage cam of radial relay clutch at active side (1081) and the passive side of radial relay clutch (1086), and the radial clutch structure (1087) is moved to be coupled with the output-end clutch structure (1052) of the output end (102) for transmitting the rotary kinetic energy, when the rotational driving torque from the prime motive end (101) to the output end (102) is no longer provided, through the elasticity of the radial clutch transmission block (1082), and/or the releasing recovering force of the radial clutch transmission block recovering spring (1083) disposed on the edge of the adjacent radial clutch transmission block (1082), such that the radial clutch structure (1087) of the radial clutch transmission block (1082) and the output-end clutch structure (1052) of the output end (102) are in a released state, and the radial relay clutch transmission board (1084) is returned;
-- an output-end clutch structure (1052): the output-end clutch structure (1052) is connected to the output end (102) and is served to be engaged with the radial clutch structure (1087) of the transmission end (1089) of the radial clutch transmission block (1082) of the radial relay clutch transmission board (1084) for transmitting rotary kinetic energy, or in a released state;
-- the clutch structure of the radial clutch structure (1087) and the output-end clutch structure (1052) consists of the friction-type clutch structure, the engaging-type clutch structure or the synchro-engaging clutch structure;
-- a middle rolling member (1085): which can be replaced by rolling balls, cone-shaped cylinders, or spherical or arc-shaped protrusions;

With the disclosed structure, a clutch assembly actuated by inertia mass and friction damping (100) is configured.

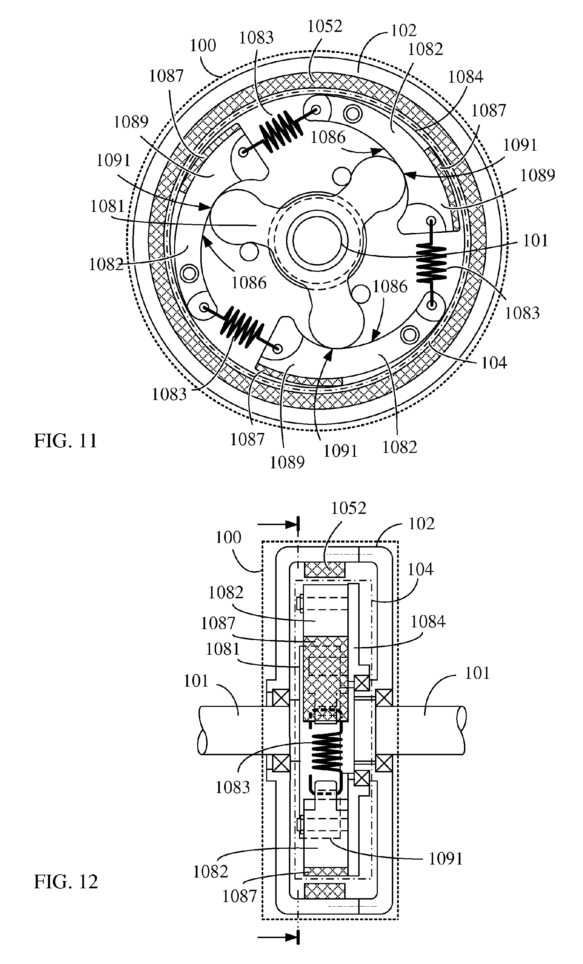

FIG. 11 is a schematic structural view of one embodiment illustrating that the linkage cam of radial relay clutch at active side (1081) of FIG. 9 being replaced by the cam top of radial relay clutch at active side (1091) for driving the radial clutch transmission block (1082);

FIG. 12 is a cross sectional view of FIG. 11.

As shown in FIG. 11 and FIG. 12, it mainly consists of:
-- a prime motive end (101): composed by a rotational mechanism for inputting the rotary kinetic energy; the prime motive end (101) is connected to the linkage cam of radial relay clutch at active side (1081) having the cam top of radial relay clutch at active side (1091), and the prime motive end (101) is a radial relay clutch, having the function of relay coupling structure, for driving the relay transmission structure assembly (104);
-- an output end (102): composed by a rotational mechanism for outputting the rotary kinetic energy; the annular interior of the output end (102) is installed with an output-end clutch structure (1052), and is controlled by the output-end clutch structure (1052);
-- a relay transmission structure assembly (104): the relay transmission structure assembly (104) is installed between the prime motive end (101) and the output end (102), the three components are arranged as a concentric annular structure, the relay transmission structure assembly (104) has a radial relay clutch which mainly consists of a cam top of radial relay clutch at active side (1091), a radial clutch transmission block (1082), a radial clutch transmission block recovering spring (1083), and a radial relay clutch transmission board (1084); wherein the cam top of radial relay clutch at active side (1091) is driven by the prime motive end (101), coupled to a passive side of radial relay clutch (1086) which is an obliquely compelled surface with respect to the radial clutch transmission block (1082), the radial clutch transmission block (1082) is installed on the radial relay clutch transmission board (1084), one end of the radial clutch transmission block (1082) is fastened on the radial relay clutch transmission board (1084), the other end of the radial clutch transmission block (1082) is served as a transmission end (1089), the passive side of radial relay clutch (1086) of the transmission end (1089) is an obliquely compelled surface allowing the cam top of radial relay clutch at active side (1091) to be coupled, the other surface of the transmission end (1089) is served as a radial clutch structure (1087), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, the passive side of radial relay clutch (1086) which is an obliquely compelled surface with respect to the radial clutch transmission block (1082) is compelled to be moved by the cam top of radial relay clutch at active side (1091), and the radial clutch structure (1087) is moved to be coupled with the output-end clutch structure (1052) of the output end (102) for transmitting the rotary kinetic energy, when the rotational driving torque from the prime motive end (101) to the output end (102) is no longer provided, through the elasticity of the radial clutch transmission block (1082), and/or the releasing recovering force of the radial clutch transmission block recovering spring (1083) disposed on the edge of the adjacent radial clutch transmission block (1082), such that the radial clutch structure (1087) of the radial clutch transmission block (1082) and the output-end clutch structure (1052) of the output end (102) are in a released state, and the radial relay clutch transmission board (1084) is returned;
-- an output-end clutch structure (1052): the output-end clutch structure (1052) is connected to the output end (102) and is served to be engaged with the radial clutch structure (1087) of the transmission end (1089) of the radial clutch transmission block (1082) of the radial relay clutch transmission board (1084) for transmitting rotary kinetic energy, or in a released state;
-- the clutch structure of the radial clutch structure (1087) and the output-end clutch structure (1052) consists of the friction-type clutch structure, the engaging-type clutch structure or the synchro-engaging clutch structure;
-- a middle rolling member (1085): which can be replaced by rolling balls, cone-shaped cylinders, or spherical or arc-shaped rolling members;

With the disclosed structure, a clutch assembly actuated by inertia mass and friction damping (100) is configured.

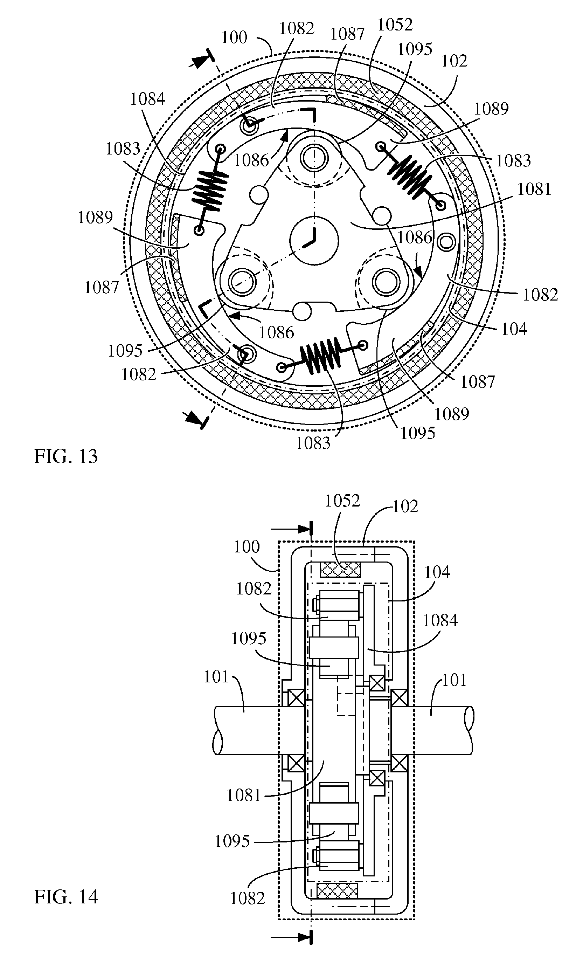

FIG. 13 is a schematic structural view of one embodiment illustrating that the top of the linkage cam of radial relay clutch at active side (1081) of FIG. 9 being combined with a roller at cam top of radial relay clutch at active side (1095) for driving the radial clutch transmission block (1082);

FIG. 14 is a cross sectional view of FIG. 13.

As shown in FIG. 13 and FIG. 14, it mainly consists of:
-- a prime motive end (101): composed by a rotational mechanism for inputting the rotary kinetic energy; the prime motive end (101) is connected to the linkage cam of radial relay clutch at active side (1081) having the roller at cam top of radial relay clutch at active side (1095), and the prime motive end (101) is a radial relay clutch, having the function of relay coupling structure, for driving the relay transmission structure assembly (104);
-- an output end (102): composed by a rotational mechanism for outputting the rotary kinetic energy; the annular interior of the output end (102) is installed with an output-end clutch structure (1052), and is controlled by the output-end clutch structure (1052);
-- a relay transmission structure assembly (104): the relay transmission structure assembly (104) is installed between the prime motive end (101) and the output end (102), the three components are arranged as a concentric annular structure, the relay transmission structure assembly (104) has a radial relay clutch which mainly consists of a roller at cam top of radial relay clutch at active side (1095), a radial clutch transmission block (1082), a radial clutch transmission block recovering spring (1083), and a radial relay clutch transmission board (1084); wherein the roller at cam top of radial relay clutch at active side (1095) is driven by the prime motive end (101), coupled to a passive side of radial relay clutch (1086) which is an obliquely compelled surface with respect to the radial clutch transmission block (1082), the radial clutch transmission block (1082) is installed on the radial relay clutch transmission board (1084), one end of the radial clutch transmission block (1082) is fastened on the radial relay clutch transmission board (1084), the other end of the radial clutch transmission block (1082) is served as a transmission end (1089), the passive side of radial relay clutch (1086) of the transmission end (1089) is an obliquely compelled surface allowing the roller at cam top of radial relay clutch at active side (1095) to be coupled, the other surface of the transmission end (1089) is served as a radial clutch structure (1087), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, the passive side of radial relay clutch (1086) which is an obliquely compelled surface with respect to the radial clutch transmission block (1082) is compelled to be moved by the roller at cam top of radial relay clutch at prime motive end (1095), and the radial clutch structure (1087) is moved to be coupled with the output-end clutch structure (1052) of the output end (102) for transmitting the rotary kinetic energy, when the rotational driving torque from the prime motive end (101) to the output end (102) is no longer provided, through the elasticity of the radial clutch transmission block (1082), and/or the releasing recovering force of the radial clutch transmission block recovering spring (1083) disposed on the edge of the adjacent radial clutch transmission block (1082), such that the radial clutch structure (1087) of the radial clutch transmission block (1082) and the output-end clutch structure (1052) of the output end (102) are in a released state, and the radial relay clutch transmission board (1084) is returned;
-- an output-end clutch structure (1052): the output-end clutch structure (1052) is connected to the output end (102) and is served to be engaged with the radial clutch structure (1087) of the transmission end (1089) of the radial clutch transmission block (1082) of the radial relay clutch transmission board (1084) for transmitting rotary kinetic energy, or in a released state;
-- the clutch structure of the radial clutch structure (1087) and the output-end clutch structure (1052) consists of the friction-type clutch structure, the engaging-type clutch structure or the synchro-engaging clutch structure;
-- a middle rolling member (1085): which can be replaced by rolling balls, cone-shaped cylinders, or spherical or arc-shaped protrusions;

With the disclosed structure, a clutch assembly actuated by inertia mass and friction damping (100) is configured.

The clutch actuated by inertia mass and friction damping can be configured by two or more than two of clutches actuated by inertia mass and friction damping and has a common-driven prime motive end (101), including:
(I) two or more than two clutch assemblies actuated by inertia mass and friction damping (100) performing clutch operation in the same rotating direction and the individual prime motive end (101) installed in the same rotating direction for clutch operation being jointly driven in the same rotating direction, the output end (102) is formed in an individual operating state; (as shown in FIG. 15, which is a schematic structural view of one embodiment illustrating that two or more than two clutch assemblies actuated by inertia mass and friction damping (100) of the present invention and individual prime motive end (101) installed in the same rotating direction for clutch operation are jointly driven in the same rotating direction, and the output end (102) is formed in an individual operating state.)
(II) two or more than two clutch assemblies actuated by inertia mass and friction damping (100) performing clutch operation in different rotating directions and the individual prime motive end (101) installed in different rotating directions for clutch operation being jointly driven in the same rotating direction, the output end (102) is formed in an individual operating state; (as shown in FIG. 16, which is a schematic structural view of one embodiment illustrating that two or more than two clutch assemblies actuated by inertia mass and friction damping (100) of the present invention and individual prime motive end (101) installed in different rotating directions for clutch operation are jointly driven in the same rotating direction, and the output end (102) is formed in an individual operating state.)

According to the clutch actuated by inertia mass and friction damping, a bidirectional rotating clutch function can be further equipped, which mainly consists:
two or more than two clutch assemblies actuated by inertia mass and friction damping (100) performing clutch operation in different rotating directions and individual prime motive end (101) installed in different rotating directions for clutch operation being jointly driven in the same rotating direction of the first rotating direction or the second rotating direction, the output end (102) is jointly installed on the same loading interface structural body (200), thereby forming the bidirectional rotating clutch function in the first rotating direction and the second rotating direction; (as shown in FIG. 17, which is a schematic structural view of one embodiment illustrating that two or more than two clutch assemblies actuated by inertia mass and friction damping (100) of the present invention and individual prime motive end (101) installed in different rotating directions for clutch operation are jointly driven in the same rotating direction of the first rotating direction or the second rotating direction, the output end (102) is jointly connected to the same loading interface structural body (200), thereby forming the bidirectional rotating clutch function in the first rotating direction and the second rotating direction.)

## Claims

1. A clutch actuated by inertia mass and friction damping, which is equipped with a relay transmission structure assembly (104) not additionally installed with a damping device, when the input side of the prime motive end (101) drives the relay transmission structure according to a set rotating direction, relative movement is generated through the friction damping between the inertia mass of the relay transmission structure assembly (104) itself and the adjacent machinery unit contacted in a sliding means, for driving the relay transmission structure assembly (104) and the installed relay output clutch structure, thereby enabling the output-end clutch structure (1052) installed at the output end (102) to perform operations of coupling or releasing for transmitting rotary kinetic energy, and a recovering actuation spring (120) provided between the relay output clutch structure and the output-end clutch structure (1052) is tightened;
when the rotational driving torque at the prime motive end (101) is no longer provided, the relay transmission structure assembly (104) and the installed relay output clutch structure are returned through actions of the recovering actuation spring (120), so the relay output clutch structure and the output-end clutch structure (1052) are in a released state;
Said relay transmission structure assembly (104) includes one or more than one means to form the damping when the prime motive end (101) inputting the rotary kinetic energy to the relay transmission structure assembly (104), including:
1) The machinery unit of the relay transmission structure assembly (104) is driven by the prime motive end (101) for performing angle displacement or rotating displacement thereby forming damping through the friction between the relay transmission structure assembly (104) and the relative moving structural unit, e.g. a bearing or socket;
2) The machinery unit installed at the rear portion of the relay transmission structure assembly (104) is driven by the prime motive end (101) thereby forming damping through the friction between the relay transmission structure assembly (104) and the adjacent machinery unit;
3) Damping formed through the above mentioned means;
With the disclosed structure, a clutch assembly actuated by inertia mass and friction damping (100) is configured.

2. A clutch actuated by inertia mass and friction damping as claimed in claim 1, wherein it mainly consists of:
-- a prime motive end (101): composed by a rotational mechanism for inputting the rotary kinetic energy; the prime motive end (101) is served to drive an active side of relay coupling structure of a relay coupling structure (204) installed in a relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting the rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational drive and axial movement, the relay transmission structure assembly (104) is provided with a relay coupling structure (204) driven by the prime motive end (101), the relay coupling structure (204) has an active side of relay coupling structure and a passive side of relay coupling structure coaxially coupled and interacted with the active side, a relay transmission structure assembly (104) is not additionally installed with a damping device, when the input side of a prime motive end (101) drives the relay transmission structure according to a set rotating direction, relative movement is generated through the friction damping between the inertia mass of the relay transmission structure assembly (104) itself and the adjacent machinery unit contacted in a sliding means, so as to drive the relay output clutch structure (1051) installed in the relay transmission structure assembly (104) to be engaged with an output-end clutch structure (1052) for transmitting rotary kinetic energy, and a recovering actuation spring (120) is then forced being tightened; when the rotational driving torque from the prime motive end (101) to the output end (102) is no longer provided, the relay output clutch structure (1051) and the output-end clutch structure (1052) are in a released state through a release recovering effect provided by the recovering actuation spring (120) and the passive side of relay coupling structure is returned;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and disposed between the relay output clutch structure (1051) and the output-end clutch structure (1052), and the normal state thereof is to allow the relay output clutch structure (1051) and the output-end clutch structure (1052) being in a released state, and when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is installed in the relay transmission structure assembly (104), when the active side of relay coupling structure is driven by the prime motive end (101), the relay output clutch structure (1051) and the relay transmission structure assembly (104) are driven by the active side of relay coupling structure of the relay coupling structure (204) to be engaged with the output-end clutch structure (1052) so as to transmit rotary kinetic energy, when the driving force from the prime motive end (101) to the output end (102) is no longer provided, the relay output clutch structure (1051) and the output-end clutch structure (1052) are in a released state through the releasing elastic force of the recovering actuation spring (120);
-- an output-end clutch structure (1052): composed by a clutch function structure capable of being engaged with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure, or the synchro-engaging clutch structure;
With the disclosed structure, a clutch assembly actuated by inertia mass and friction damping (100) is configured.

3. A clutch actuated by inertia mass and friction damping as claimed in claim 1, wherein the relay coupling structure (204) installed in the relay transmission structure assembly (104) can be further composed by a screw rod structure (1041) and a screw nut structure (1042), and it mainly consists of:
-- a prime motive end (101): composed by a rotational mechanism for inputting the rotary kinetic energy; the prime motive end (101) is a screw rod structure (1041), having the function of active end of relay coupling structure, for driving the relay transmission structure assembly (104); the prime motive end (101) is installed with a limiting structure (115) for limiting relative positions of the relay transmission structure assembly (104) and the prime motive end (101);
-- an output end (102): composed by a rotational mechanism for outputting the rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and is capable of performing rotational drive and axial movement, the relay transmission structure assembly (104) is installed with a relay coupling structure driven by the prime motive end (101), the relay coupling structure has the function of the active side of relay coupling structure composed by the screw rod structure (1041) and the function of passive side of relay coupling structure composed by the screw nut structure (1042), the screw rod structure (1041) and the screw nut structure (1042) are coaxially coupled and interacted, the above mentioned passive side of relay coupling structure composed by the screw nut structure (1042) is connected to the relay transmission structure assembly (104), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the screw rod structure (1041) is driven by the prime motive end (101), the relay transmission structure assembly (104) connected with the screw nut structure (1042) generates a relative axial movement for driving the relay output clutch structure (1051) installed in the relay transmission structure assembly (104) to be engaged with the output-end clutch structure (1052) for transmitting rotary kinetic energy, and the recovering actuation spring (120) is then forced being tightened;
when the rotational driving torque from the prime motive end (101) to the output end (102) is no longer provided, the relay output clutch structure (1051) and the output-end clutch structure (1052) are in a released state and the screw nut structure (1042) is returned through a recovering effect provided by the recovering actuation spring (120);
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and disposed between the relay output clutch structure (1051) and the output-end clutch structure (1052), and the normal state thereof is to allow the relay output clutch structure (1051) and the output-end clutch structure (1052) being in a released state, and when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is installed in the relay transmission structure assembly (104), when the screw rod structure (1041) is driven by the prime motive end (101), the relay output clutch structure (1051) and the relay transmission structure assembly (104) are driven by the screw rod structure (1041) of the relay coupling structure to be engaged with the output-end clutch structure (1052) so as to transmit rotary kinetic energy and to force to tighten the recovering actuation spring (120); when the rotational driving torque from the prime motive end (101) to the output end (102) is no longer provided, the relay output clutch structure (1051) and the output-end clutch structure (1052) are in a released state through the releasing elastic force of the recovering actuation spring (120);
-- an out-put end clutch structure (1052): composed by a clutch function structure capable of being engaged with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;
With the disclosed structure, a clutch assembly actuated by inertia mass and friction damping (100) is configured.

4. A clutch actuated by inertia mass and friction damping as claimed in claim 1, wherein the relay coupling structure installed in the relay transmission structure assembly (104) can be further composed by a coil-shaped spring capable of rotating for axial actuation (1043), and it mainly consists of:
-- a prime motive end (101): composed by a rotational mechanism for inputting rotary kinetic energy; the prime motive end (101) is a coil-shaped spring capable of rotating for axial actuation (1043) for driving the relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), and capable of rotational drive and axial movement, the relay transmission structure assembly (104) is installed with a coil-shaped spring capable of rotating for axial actuation (1043) serving to provide the relay coupling structure function and is coaxially shaft-installed between the relay transmission structure assembly (104) and the prime motive end (101), one end of the coil-shaped spring capable of rotating for axial actuation (1043) is fastened at the prime motive end (101) for providing the function of the active side of relay coupling structure, the other end of the coil-shaped spring capable of rotating for axial actuation (1043) is installed in the relay transmission structure assembly (104) for providing the function of the passive side of relay coupling structure, a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the coil-shaped spring capable of rotating for axial actuation (1043) is processed with a tighten operation of angular displacement drive at the prime motive end (101), a damping effect is generated, the coil-shaped spring capable of rotating for axial actuation (1043) generates an axial actuation force, so the relay transmission structure assembly (104) generates a relative axial movement, and further drives the relay output clutch structure (1051) installed in the relay transmission structure assembly (104) to be engaged with the output-end clutch structure (1052) so as to transmit rotary kinetic energy, and force the recovering actuation spring (120) being tightened; when the rotational driving torque from the prime motive end (101) to the output end (102) is no longer provided, the relay output clutch structure (1051) and the output-end clutch structure (1052) are in a released state through the releasing recovering force of the recovering actuation spring (120) and the coil-shaped spring capable of rotating for axial actuation (1043) is returned;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and disposed between the relay output clutch structure (1051) and the output-end clutch structure (1052), and the normal state thereof is to allow the relay output clutch structure (1051) and the output-end clutch structure (1052) being in a released state, and when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is installed in the relay transmission structure assembly (104), when the coil-shaped spring capable of rotating for axial actuation (1043) is driven at the prime motive end (101), the relay output clutch structure (1051) and the relay transmission structure assembly (104) are driven by the coil-shaped spring capable of rotating for axial actuation (1043) having the relay coupling structure function and installed between the relay transmission structure assembly (104) and the prime motive end (101), so as to be engaged with the output-end clutch structure (1052) for transmitting rotary kinetic energy and forcing the recovering actuation spring (120) being tightened; when the rotational driving torque from the prime motive end (101) to the output end (102) is no longer provided, the relay output clutch structure (1051) and the output-end clutch structure (1052) are in a released state through the releasing recovering force of the recovering actuation spring (120) and the coil-shaped spring capable of rotating for axial actuation (1043) is returned;
-- an out-put end clutch structure (1052): composed by a clutch function structure capable of performing closing/opening operations with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;
With the disclosed structure, a clutch assembly actuated by inertia mass and friction damping (100) is configured.

5. A clutch actuated by inertia mass and friction damping as claimed in claim 1, wherein the relay coupling structure (204) installed in the relay transmission structure assembly (104) can be further composed by an axial compelling over running clutch, and it mainly consists of:
-- a prime motive end (101): composed by a rotational mechanism for inputting the rotary kinetic energy; the prime motive end (101) is an active side of axial compelling over running clutch (1061), having the function of the active side of relay input coupling structure, for driving the relay transmission structure assembly (104), the prime motive end (101) is installed with a limiting structure (115) for limiting relative positions of the relay transmission structure assembly (104) and the prime motive end (101);
-- an output end (102): composed by a rotational mechanism for outputting the rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), the relay transmission structure assembly (104) is installed with an axial compelling over running clutch (1060) having the function of relay coupling structure, the axial compelling over running clutch (1060) has an active side of axial compelling over running clutch (1061) and a passive side of axial compelling over running clutch (1062) and middle rolling members (1063), a plurality of saw-shaped intervals are formed between the active side of axial compelling over running clutch (1061) and the passive side of axial compelling over running clutch (1062) for accommodating the middle rolling members (1063) so as to be equipped with the over running clutch function; a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the axial compelling over running clutch (1060) is driven by the prime motive end (101), a damping effect is generated, the active side of axial compelling over running clutch (1061) applies rotational driving torque to the passive side of axial compelling over running clutch (1062) via the middle running members (1063); before the middle rolling members (1063) are forced to be latched between the active side of axial compelling over running clutch (1061) and the passive side of axial compelling over running clutch (1062), the passive side of axial compelling over running clutch (1062) is compelled to be moved axially, so the relay transmission structure assembly (104) installed with the axial compelling over running clutch (1060) generates a relative movement for driving the relay output clutch structure (1051) installed in the relay transmission structure assembly (104) to be engaged with the output-end clutch structure (1052) and forcing the recovering actuation spring (120) being tightened; when the rotational driving torque from the prime motive end (101) to the output end (102) is no longer provided, the relay output clutch structure (1051) and the output-end clutch structure (1052) are in a released state through the releasing recovering force of the recovering actuation spring (120) and the passive side of axial compelling over running clutch (1062) is returned;
-- a limiting structure (115): composed by a mechanism capable of limiting relative positions of the relay transmission structure assembly (104) and the prime motive end (101), and is combined with the rotary part of the prime motive end (101);
-- a recovering actuation spring (120): which is a spring device capable of being pressed for storing energy and being released for outputting energy, and disposed between the relay output clutch structure (1051) and the output-end clutch structure (1052), and the normal state thereof is to allow the relay output clutch structure (1051) and the output-end clutch structure (1052) being in a released state, and when the relay output clutch structure (1051) and the output-end clutch structure (1052) are driven so as to be engaged, the recovering actuation spring (120) is synchronously pre-pressed for being in an energy-storing state;
-- a relay output clutch structure (1051): the relay output clutch structure (1051) is installed in the relay transmission structure assembly (104), when the active side of axial compelling over running clutch (1061) is driven by the prime motive end (101), the passive side of axial compelling over running clutch (1062) installed in the relay transmission structure assembly (104) is axially driven so as to drive the relay transmission structure assembly (104) and the relay output clutch structure (1051) installed in the relay transmission structure assembly (104) to be engaged with the output-end clutch structure (1052) for transmitting rotary kinetic energy and forcing the recovering actuation spring (120) being tightened; when the rotational driving torque from the prime motive end (101) to the output end (102) is no longer provided, the relay output clutch structure (1051) and the output-end clutch structure (1052) are in a released state through the releasing elastic force of the recovering actuation spring (120) and the passive side of axial compelling over running clutch (1062) is returned;
-- an out-put end clutch structure (1052): composed by a clutch function structure capable of being engaged with the relay output clutch structure (1051) to transmit rotary kinetic energy, or being disengaged for terminating the transmission of the rotary kinetic energy, and the output-end clutch structure (1052) is connected to the output end (102);
-- the clutch structure of the relay output clutch structure (1051) and the output-end clutch structure (1052) consists of the friction-type clutch structure, the engaging-type clutch structure or the synchro-engaging clutch structure;
With the disclosed structure, a clutch assembly actuated by inertia mass and friction damping (100) is configured.

6. A clutch actuated by inertia mass and friction damping as claimed in claim 1, wherein the relay coupling structure installed in the relay transmission structure assembly (104) can be further composed by the axial relay clutch of the axial clutch transmission block having axial compelling pre-forces recovering, and it mainly consists of:
-- a prime motive end (101): composed by a rotational mechanism for inputting the rotary kinetic energy; the prime motive end (101) is an axial relay clutch, having the function of relay coupling structure, for driving the relay transmission structure assembly (104);
-- an output end (102): composed by a rotational mechanism for outputting the rotary kinetic energy; the output end (102) is connected to an output-end clutch structure (1052), and is controlled by the output-end clutch structure (1052);
-- a relay transmission structure assembly (104): the relay transmission structure assembly (104) is installed between the prime motive end (101) and the output end (102), the relay transmission structure assembly (104) is installed with an axial relay clutch which mainly consists of an active side of axial relay clutch (1071), an axial clutch transmission block (1072), an axial clutch transmission block recovering spring (1073), an axial relay clutch transmission board (1074), and a middle rolling member (1075); wherein the active side of axial relay clutch (1071) accommodating the middle rolling member (1075) is driven by the prime motive end (101), the middle rolling member (1075) is coupled to a passive side of axial relay clutch (1076) which is an obliquely compelled surface with respect to the axial clutch transmission block (1072), the axial clutch transmission block (1072) is installed on the axial relay clutch transmission board (1074), one end of the axial clutch transmission block (1072) is fastened on the axial relay clutch transmission board (1074), the other end of the axial clutch transmission block (1072) is served as a transmission end (1079), the passive side of axial relay clutch (1076) of the transmission end (1079) is an obliquely compelled surface allowing the middle rolling member (1075) to be coupled, the other surface of the transmission end (1079) is served as an axial clutch structure (1077), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the active side of axial relay clutch (1071) equipped with the middle rolling member (1075) is applied with rotational driving torque by the prime motive end (101), the passive side of the axial relay clutch (1076) which is an obliquely compelled surface with respect to the axial clutch transmission block (1072) is compelled to be moved by the middle rolling member (1075) installed at the active side of axial relay clutch (1071), and the axial clutch structure (1077) is moved to be coupled with the output-end clutch structure (1052) of the output end (102) for transmitting the rotary kinetic energy, when the rotational driving torque from the prime motive end (101) to the output end (102) is no longer provided, through the elasticity of the axial clutch transmission block (1072), and/or the releasing recovering force of the axial clutch transmission block recovering spring (1073) installed between the axial relay clutch transmission board (1074) and the middle rolling member (1075), such that the axial clutch structure (1077) of the axial clutch transmission block (1072) and the output-end clutch structure (1052) of the output end (102) are in a released state, and the axial relay clutch transmission board (1074) is returned;
-- an output-end clutch structure (1052): the output-end clutch structure (1052) is connected to the output end (102) and is served to be engaged for transmitting rotary kinetic energy with the axial clutch structure (1077) of the transmission end (1079) of the axial clutch transmission block (1072) of the axial relay clutch transmission board (1074), or in a released state;
-- the clutch structure of the axial clutch structure (1077) and the output-end clutch structure (1052) consists of the friction-type clutch structure, the engaging-type clutch structure or the synchro-engaging clutch structure;
-- a middle rolling member (1075): which can be replaced by rolling balls, cone-shaped cylinders, or spherical or arc-shaped protrusions;
With the disclosed structure, a clutch assembly actuated by inertia mass and friction damping (100) is configured.

7. A clutch actuated by inertia mass and friction damping as claimed in claim 1, wherein the relay output coupling structure installed in the relay transmission structure assembly (104) can be further composed by a radial relay clutch of the radial clutch transmission block having radial compelling pre-forced recovering, and it mainly consists of:
- - a prime motive end (101): composed by a rotational mechanism for inputting the rotary kinetic energy; the prime motive end (101) is connected to the linkage cam of radial relay clutch at active side (1081), and the prime motive end (101) is a radial relay clutch, having the function of relay coupling structure, for driving the relay transmission structure assembly (104);
- - an output end (102): composed by a rotational mechanism for outputting the rotary kinetic energy; the annular interior of the output end (102) is installed with an output-end clutch structure (1052), and is controlled by the output-end clutch structure (1052);
- - a relay transmission structure assembly (104): the relay transmission structure assembly (104) is installed between the prime motive end (101) and the output end (102), the three components are arranged as a concentric annular structure, the relay transmission structure assembly (104) has a radial relay clutch which mainly consists of a linkage cam of radial relay clutch at active side (1081), a radial clutch transmission block (1082), a radial clutch transmission block recovering spring (1083), a radial relay clutch transmission board (1084), and a middle rolling member (1085); wherein the radial coupling surface of the linkage cam of radial relay clutch at active side (1081) is installed with the middle rolling member (1085) driven by the prime motive end (101), the middle rolling member (1085) is coupled to a passive side of radial relay clutch (1086) which is an obliquely compelled surface with respect to the radial clutch transmission block (1082), the radial clutch transmission block (1082) is installed on the radial relay clutch transmission board (1084), one end of the radial clutch transmission block (1082) is fastened on the radial relay clutch transmission board (1084), the other end of the radial clutch transmission block (1082) is served as a transmission end (1089), the passive side of radial relay clutch (1086) of the transmission end (1089) is an obliquely compelled surface allowing the middle rolling member (1085) to be coupled, the other surface of the transmission end (1089) is served as a radial clutch structure (1087), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, when the linkage cam of radial relay clutch at active side (1081) equipped with the middle rolling member (1085) is applied with rotational driving torque by the prime motive end (101), the passive side of radial relay clutch (1086) which is an obliquely compelled surface with respect to the radial clutch transmission block (1082) is compelled to be moved by the middle rolling member (1085) installed between the linkage cam of radial relay clutch at active side (1081) and the passive side of radial relay clutch (1086), and the radial clutch structure (1087) is moved to be coupled with the output-end clutch structure (1052) of the output end (102) for transmitting the rotary kinetic energy, when the rotational driving torque from the prime motive end (101) to the output end (102) is no longer provided, through the elasticity of the radial clutch transmission block (1082), and/or the releasing recovering force of the radial clutch transmission block recovering spring (1083) disposed on the edge of the adjacent radial clutch transmission block (1082), such that the radial clutch structure (1087) of the radial clutch transmission block (1082) and the output-end clutch structure (1052) of the output end (102) are in a released state, and the radial relay clutch transmission board (1084) is returned;
- - an output-end clutch structure (1052): the output-end clutch structure (1052) is connected to the output end (102) and is served to be engaged with the radial clutch structure (1087) of the transmission end (1089) of the radial clutch transmission block (1082) of the radial relay clutch transmission board (1084) for transmitting rotary kinetic energy, or in a released state;
- - the clutch structure of the radial clutch structure (1087) and the output-end clutch structure (1052) consists of the friction-type clutch structure, the engaging-type clutch structure or the synchro-engaging clutch structure;
- - a middle rolling member (1085): which can be replaced by rolling balls, cone-shaped cylinders, or spherical or arc-shaped protrusions;
With the disclosed structure, a clutch assembly actuated by inertia mass and friction damping (100) is configured.

8. A clutch actuated by inertia mass and friction damping as claimed in claim 7, wherein the linkage cam of radial relay clutch at active side (1081) is replaced by the cam top of radial relay clutch at active side (1091) for driving the radial clutch transmission block (1082), and it mainly consists of:
- - a prime motive end (101): composed by a rotational mechanism for inputting the rotary kinetic energy; the prime motive end (101) is connected to the linkage cam of radial relay clutch at active side (1081) having the cam top of radial relay clutch at active side (1091), and the prime motive end (101) is a radial relay clutch, having the function of relay coupling structure, for driving the relay transmission structure assembly (104);
- - an output end (102): composed by a rotational mechanism for outputting the rotary kinetic energy; the annular interior of the output end (102) is installed with an output-end clutch structure (1052), and is controlled by the output-end clutch structure (1052);
- - a relay transmission structure assembly (104): the relay transmission structure assembly (104) is installed between the prime motive end (101) and the output end (102), the three components are arranged as a concentric annular structure, the relay transmission structure assembly (104) has a radial relay clutch which mainly consists of a cam top of radial relay clutch at active side (1091), a radial clutch transmission block (1082), a radial clutch transmission block recovering spring (1083), and a radial relay clutch transmission board (1084); wherein the cam top of radial relay clutch at active side (1091) is driven by the prime motive end (101), coupled to a passive side of radial relay clutch (1086) which is an obliquely compelled surface with respect to the radial clutch transmission block (1082), the radial clutch transmission block (1082) is installed on the radial relay clutch transmission board (1084), one end of the radial clutch transmission block (1082) is fastened on the radial relay clutch transmission board (1084), the other end of the radial clutch transmission block (1082) is served as a transmission end (1089), the passive side of radial relay clutch (1086) of the transmission end (1089) is an obliquely compelled surface allowing the cam top of radial relay clutch at active side (1091) to be coupled, the other surface of the transmission end (1089) is served as a radial clutch structure (1087), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, the passive side of radial relay clutch (1086) which is an obliquely compelled surface with respect to the radial clutch transmission block (1082) is compelled to be moved by the cam top of radial relay clutch at active side (1091), and the radial clutch structure (1087) is moved to be coupled with the output-end clutch structure (1052) of the output end (102) for transmitting the rotary kinetic energy, when the rotational driving torque from the prime motive end (101) to the output end (102) is no longer provided, through the elasticity of the radial clutch transmission block (1082), and/or the releasing recovering force of the radial clutch transmission block recovering spring (1083) disposed on the edge of the adjacent radial clutch transmission block (1082), such that the radial clutch structure (1087) of the radial clutch transmission block (1082) and the output-end clutch structure (1052) of the output end (102) are in a released state, and the radial relay clutch transmission board (1084) is returned;
- - an output-end clutch structure (1052): the output-end clutch structure (1052) is connected to the output end (102) and is served to be engaged with the radial clutch structure (1087) of the transmission end (1089) of the radial clutch transmission block (1082) of the radial relay clutch transmission board (1084) for transmitting rotary kinetic energy, or in a released state;
- - the clutch structure of the radial clutch structure (1087) and the output-end clutch structure (1052) consists of the friction-type clutch structure, the engaging-type clutch structure or the synchro-engaging clutch structure;
- - a middle rolling member (1085): which can be replaced by rolling balls, cone-shaped cylinders, or spherical or arc-shaped rolling members;
With the disclosed structure, a clutch assembly actuated by inertia mass and friction damping (100) is configured.

9. A clutch actuated by inertia mass and friction damping as claimed in claim 7, wherein the top of the linkage cam of radial relay clutch at active side (1081) is combined with a roller at cam top of radial relay clutch at active side (1095) for driving the radial clutch transmission block (1082), and it mainly consists of:
- - a prime motive end (101): composed by a rotational mechanism for inputting the rotary kinetic energy; the prime motive end (101) is connected to the linkage cam of radial relay clutch at active side (1081) having the roller at cam top of radial relay clutch at active side (1095), and the prime motive end (101) is a radial relay clutch, having the function of relay coupling structure, for driving the relay transmission structure assembly (104);
- - an output end (102): composed by a rotational mechanism for outputting the rotary kinetic energy; the annular interior of the output end (102) is installed with an output-end clutch structure (1052), and is controlled by the output-end clutch structure (1052);
- - a relay transmission structure assembly (104): the relay transmission structure assembly (104) is installed between the prime motive end (101) and the output end (102), the three components are arranged as a concentric annular structure, the relay transmission structure assembly (104) has a radial relay clutch which mainly consists of a roller at cam top of radial relay clutch at active side (1095), a radial clutch transmission block (1082), a radial clutch transmission block recovering spring (1083), and a radial relay clutch transmission board (1084); wherein the roller at cam top of radial relay clutch at active side (1095) is driven by the prime motive end (101), coupled to a passive side of radial relay clutch (1086) which is an obliquely compelled surface with respect to the radial clutch transmission block (1082), the radial clutch transmission block (1082) is installed on the radial relay clutch transmission board (1084), one end of the radial clutch transmission block (1082) is fastened on the radial relay clutch transmission board (1084), the other end of the radial clutch transmission block (1082) is served as a transmission end (1089), the passive side of radial relay clutch (1086) of the transmission end (1089) is an obliquely compelled surface allowing the roller at cam top of radial relay clutch at active side (1095) to be coupled, the other surface of the transmission end (1089) is served as a radial clutch structure (1087), a relay transmission structure assembly (104) is not additionally installed with a damping device, when the input side of a prime motive end (101) drives the relay transmission structure according to a set rotating direction, with the friction damping generated between the inertia mass of the relay transmission structure assembly (104) itself and the adjacent machinery unit contacted in a sliding means, the passive side of radial relay clutch (1086) which is an obliquely compelled surface with respect to the radial clutch transmission block (1082) is compelled to be moved by the roller at cam top of radial relay clutch at prime motive end (1095), and the radial clutch structure (1087) is moved to be coupled with the output-end clutch structure (1052) of the output end (102) for transmitting the rotary kinetic energy, when the rotational driving torque from the prime motive end (101) to the output end (102) is no longer provided, through the elasticity of the radial clutch transmission block (1082), and/or the releasing recovering force of the radial clutch transmission block recovering spring (1083) disposed on the edge of the adjacent radial clutch transmission block (1082), such that the radial clutch structure (1087) of the radial clutch transmission block (1082) and the output-end clutch structure (1052) of the output end (102) are in a released state, and the radial relay clutch transmission board (1084) is returned;
- - an output-end clutch structure (1052): the output-end clutch structure (1052) is connected to the output end (102) and is served to be engaged with the radial clutch structure (1087) of the transmission end (1089) of the radial clutch transmission block (1082) of the radial relay clutch transmission board (1084) for transmitting rotary kinetic energy, or in a released state;
- - the clutch structure of the radial clutch structure (1087) and the output-end clutch structure (1052) consists of the friction-type clutch structure, the engaging-type clutch structure or the synchro-engaging clutch structure;
- - a middle rolling member (1085): which can be replaced by rolling balls, cone-shaped cylinders, or spherical or arc-shaped protrusions;
With the disclosed structure, a clutch assembly actuated by inertia mass and friction damping (100) is configured.

10. A clutch actuated by inertia mass and friction damping as claimed in claim 1, wherein it is further configured by two or more than two of clutches actuated by inertia mass and friction damping and has a common-driven prime motive end (101), including:
two or more than two clutch assemblies actuated by inertia mass and friction damping (100) performing clutch operation in the same rotating direction and the individual prime motive end (101) installed in the same rotating direction for clutch operation being jointly driven in the same rotating direction, the output end (102) is formed in an individual operating state.

11. A clutch actuated by inertia mass and friction damping as claimed in claim 10, wherein it includes that two or more than two clutch assemblies actuated by inertia mass and friction damping (100) performing clutch operation in different rotating directions and the individual prime motive end (101) installed in different rotating directions for clutch operation being jointly driven in the same rotating direction, the output end (102) is formed in an individual operating state.

12. A clutch actuated by inertia mass and friction damping as claimed in claim 1, wherein a bidirectional rotating clutch function can be further equipped, which mainly consists:
two or more than two clutch assemblies actuated by inertia mass and friction damping (100) performing clutch operation in different rotating directions and individual prime motive end (101) installed in different rotating directions for clutch operation being jointly driven in the same rotating direction of the first rotating direction or the second rotating direction, the output end (102) is jointly installed on the same loading interface structural body (200), thereby forming the bidirectional rotating clutch function in the first rotating direction and the second rotating direction.
